# EUROPEAN PATENT SPECIFICATION

(11) **EP 3 553 094 B1**
(45) Date of publication and mention of the grant of the patent: **31.05.2023**
(21) Application number: 17879149.7
(22) Date of filing: 06.12.2017
(51) Int. Cl.: C08F 4/6592, C08F 210/16

(54) **TRANSITION METAL COMPOUND FOR OLEFIN POLYMERIZATION CATALYST, OLEFIN POLYMERIZATION CATALYST COMPRISING SAME, AND POLYOLEFIN POLYMERIZED USING SAME**
ÜBERGANGSMETALLVERBINDUNG FÜR OLEFINPOLYMERISIERUNGSKATALYSATOR, OLEFINPOLYMERISIERUNGSKATALYSATOR DAMIT UND UNTER VERWENDUNG DAVON POLYMERISIERTES POLYOLEFIN
COMPOSÉ DE MÉTAL DE TRANSITION POUR CATALYSEUR DE POLYMÉRISATION D'OLÉFINE, CATALYSEUR DE POLYMÉRISATION D'OLÉFINE COMPRENANT CELUI-CI, ET POLYOLÉFINE POLYMÉRISÉE À L'AIDE DE CELUI-CI

(30) Priority: 06.12.2016 KR 20160164939
(43) Date of publication of application: 16.10.2019
(73) Proprietor: Hanwha Chemical Corporation, Seoul 04541 (KR)
(72) Inventor: LEE, Hyun Seung, Daejeon 34209 (KR); PARK, Na Young, Daejeon 34120 (KR); PARK, Seong Yeon, Seoul 02798 (KR); YANG, Hee Ju, Daejeon 34048 (KR); YOON, Sung Cheol, Daejeon 34125 (KR)
(74) Representative: Glawe, Delfs, Moll
(86) International application number: PCT/KR2017/014259
(87) International publication number: WO 2018/106029

(56) References cited:
- EP-A1- 3 222 622
- WO-A2-2004/067581
- KR-A- 20140 121 344
- KR-A- 20150 016 828
- KR-A- 20150 034 655
- KR-A- 20160 019 875
- US-A1- 2004 254 310
- US-A1- 2016 326 281

## Description

### [Technical Field]

The present invention is defined in the claims and relates to a transition metal compound for an olefin polymerization catalyst, an olefin polymerization catalyst containing the transition metal compound, and a polyolefin prepared using the olefin polymerization catalyst for polymerization thereof.

### [Background Art]

A metallocene catalyst, which is a type of catalyst used for polymerizing olefins, is based on a compound in which a ligand such as a cyclopentadienyl group, an indenyl group, a cycloheptadienyl group, or the like is linked to a transition metal compound or a transition metal halide compound through a coordinate covalent bond, and the basic form thereof is a sandwich structure.

The metallocene catalyst is a single-site catalyst containing the above-described metallocene compound and a co-catalyst such as methylaluminoxane or the like. The use of the metallocene catalyst for polymerization results in a polymer having a narrow molecular weight distribution and a uniform comonomer distribution, and the metallocene catalyst exhibits higher copolymerization activity than a Ziegler-Natta catalyst.

However, since there are still many challenges in using the catalyst commercially, it is required to develop a catalyst having high activity and being highly capable of achieving copolymerization even at a high temperature of 100 °C or more and an economically feasible production technique.

US 2016/0326281 A1 describes a ligand compound, a transition metal compound, and a catalytic composition including the same. Said reference in particular discloses an ethylene-1-octene polymer.

### [Disclosure]

### [Technical Problem]

One aspect of the present invention is to provide: a transition metal compound for an olefin polymerization catalyst; an olefin polymerization catalyst having high activity and being highly capable of achieving copolymerization even at a high temperature by containing the transition metal compound; and a polyolefin prepared using the olefin polymerization catalyst for polymerization thereof and thus having excellent physical properties such as low density, high molecular weight, and the like.

### [Technical Solution]

The invention is set out in the appended claims. The embodiments of the description which do not fall within the scope of said claims are provided for illustrative purposes only and do not form part of the present invention. While the claimed transitional metal compound of the invention as defined in the claims is represented by the formula 2, the present specification also provides disclosure for a transition metal compound for an olefin polymerization catalyst represented by the following Chemical Formula 1:

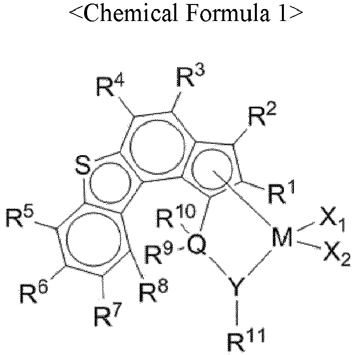

(In Chemical Formula 1, M is titanium (Ti), zirconium (Zr), or hafnium (Hf), Q is silicon (Si), carbon (C), or germanium (Ge), Y is oxygen (O), sulfur (S), nitrogen (N), or phosphorus (P), X₁ and X₂ are each independently a halogen, a C₁₋₂₀ alkyl, a C₂₋₂₀ alkenyl, a C₂₋₂₀ alkynyl, a C₆₋₂₀ aryl, a C₁₋₂₀ alkyl C₆₋₂₀ aryl, a C₆₋₂₀ aryl C₁₋₂₀ alkyl, a C₁₋₂₀ alkylamido, a C₆₋₂₀ arylamido, or a C₁₋₂₀ alkylidene, and R¹ to R¹¹ are each independently a hydrogen atom, a substituted or unsubstituted C₁₋₂₀ alkyl, a substituted or unsubstituted C₂₋₂₀ alkenyl, a substituted or unsubstituted C₆₋₂₀ aryl, a substituted or unsubstituted C₁₋₂₀ alkyl C₆₋₂₀ aryl, a substituted or unsubstituted C₆₋₂₀ aryl C₁₋₂₀ alkyl, a substituted or unsubstituted C₁₋₂₀ heteroalkyl, a substituted or unsubstituted C₃₋₂₀ heteroaryl, or a substituted or unsubstituted C₁₋₂₀ silyl.)A neighboring two among the R⁵ to R⁸ may be connected to each other, forming a substituted or unsubstituted C₅₋₂₀ ring.

The Chemical Formula 1 may be one of the following Chemical Formulas 1-1 to 1-12:

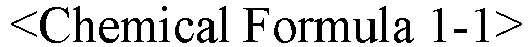

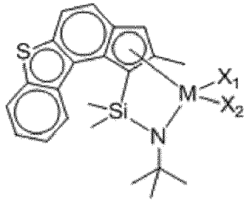

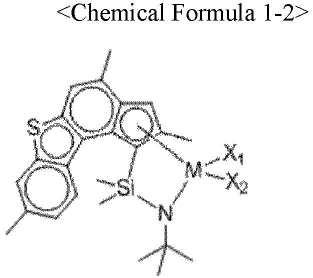

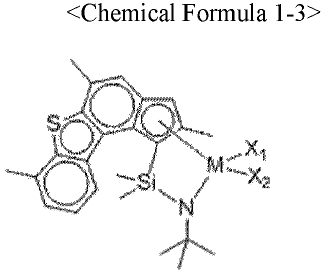

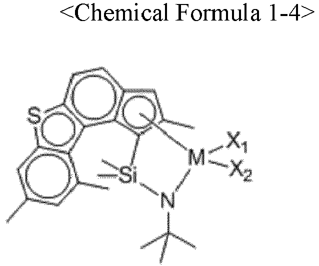

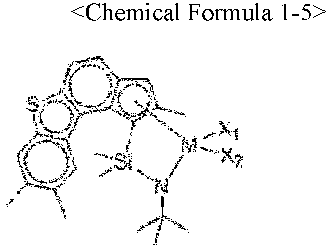

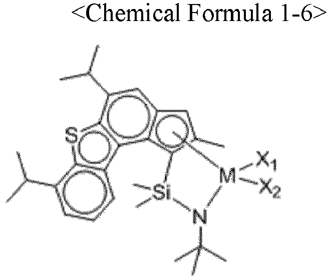

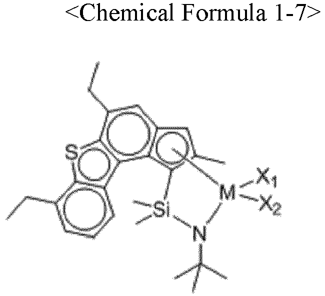

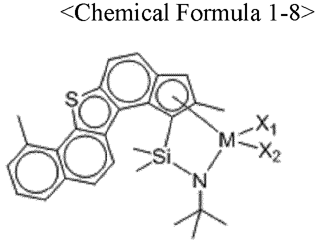

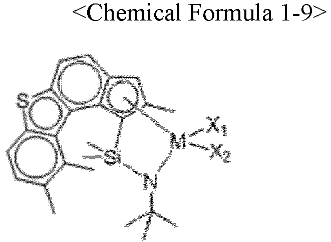

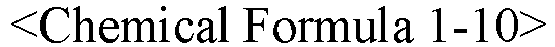

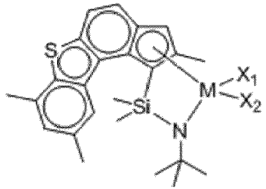

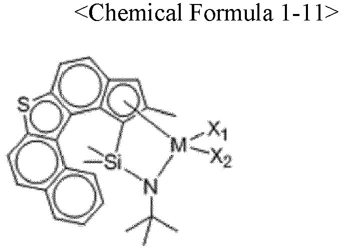

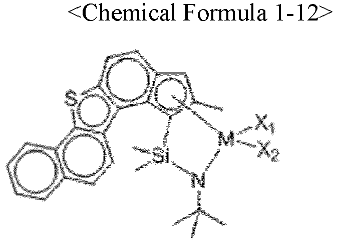

(In each independent Chemical Formula 1-1 to Chemical Formula 1-2, M is Ti, Zr, or Hf, and X₁ and X₂ are each independently a halogen, a C₁₋₂₀ alkyl, a C₂₋₂₀ alkenyl, a C₂₋₂₀ alkynyl, a C₆₋₂₀ aryl, a C₁₋₂₀ alkyl C₆₋₂₀ aryl, a C₆₋₂₀ aryl C₁₋₂₀ alkyl, a C₁₋₂₀ alkylamido, a C₆₋₂₀ arylamido, or a C₁₋₂₀ alkylidene.)

The R² to R⁸ may be each a hydrogen atom.

The Chemical Formula 1 may be the following Chemical Formula 2, which in fact corresponds to the invention as defined in the appended claim 1:

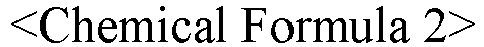

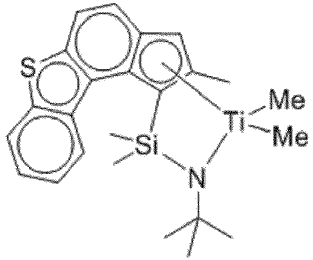

While the claimed transitional metal compound of the invention as defined in the claims is represented by the formula 2, the present specification also provides disclosure for an olefin polymerization catalyst comprising: a transition metal compound represented by the following Chemical Formula 1; and a co-catalyst compound.

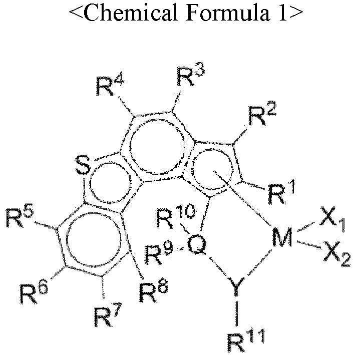

(In Chemical Formula 1, M is Ti, Zr, or Hf, Q is Si, C, or Ge, Y is O, S, N, or P, X₁ and X₂ are each independently a halogen, a C₁₋₂₀ alkyl, a C₂₋₂₀ alkenyl, a C₂₋₂₀ alkynyl, a C₆₋₂₀ aryl, a C₁₋₂₀ alkyl C₆₋₂₀ aryl, a C₆₋₂₀ aryl C₁₋₂₀ alkyl, a C₁₋₂₀ alkylamido, a C₆₋₂₀ arylamido, or a C₁₋₂₀ alkylidene, and R¹ to R¹¹ are each independently a hydrogen atom, a substituted or unsubstituted C₁₋₂₀ alkyl, a substituted or unsubstituted C₂₋₂₀ alkenyl, a substituted or unsubstituted C₆₋₂₀ aryl, a substituted or unsubstituted C₁₋₂₀ alkyl C₆₋₂₀ aryl, a substituted or unsubstituted C₆₋₂₀ aryl C₁₋₂₀ alkyl, a substituted or unsubstituted C₁₋₂₀ heteroalkyl, a substituted or unsubstituted C₃₋₂₀ heteroaryl, or a substituted or unsubstituted C₁₋₂₀ silyl.)

The Chemical Formula 1 may be one of the following Chemical Formulas 1-1 to 1-12:

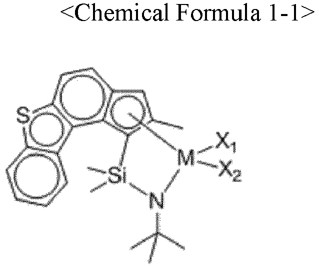

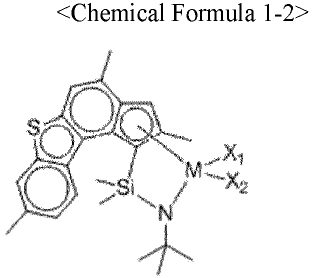

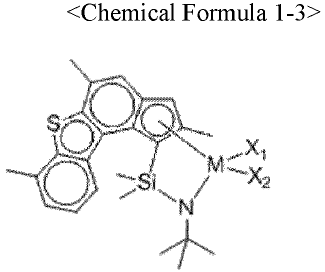

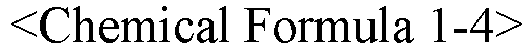

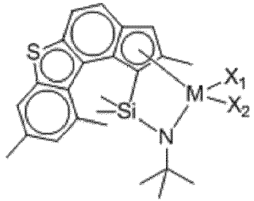

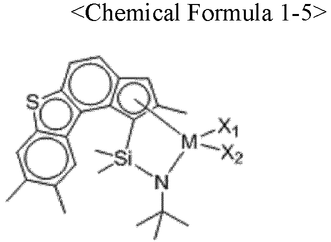

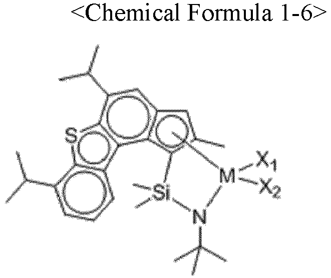

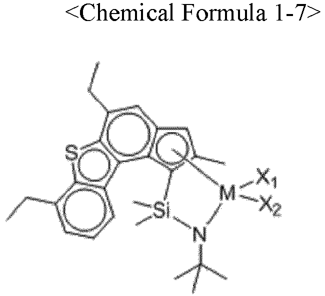

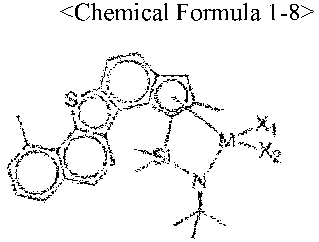

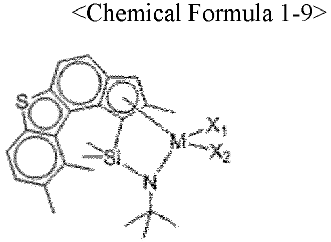

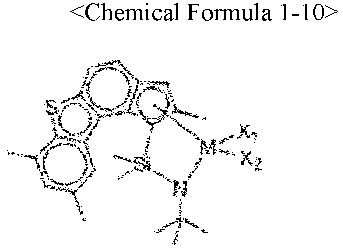

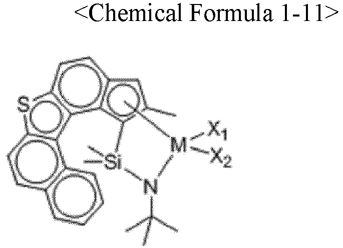

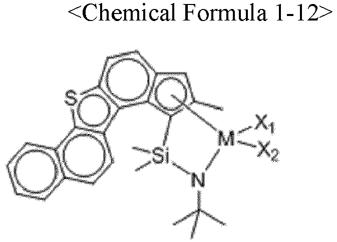

(In each independent Chemical Formula 1-1 to Chemical Formula 1-2, M is Ti, Zr, or Hf, and X₁ and X₂ are each independently a halogen, a C₁₋₂₀ alkyl, a C₂₋₂₀ alkenyl, a C₂₋₂₀ alkynyl, a C₆₋₂₀ aryl, a C₁₋₂₀ alkyl C₆₋₂₀ aryl, a C₆₋₂₀ aryl C₁₋₂₀ alkyl, a C₁₋₂₀ alkylamido, a C₆₋₂₀ arylamido, or a C₁₋₂₀ alkylidene.)

The Chemical Formula 1 may be the following Chemical Formula 2, which in fact corresponds to the invention as defined in the appended claim 2:

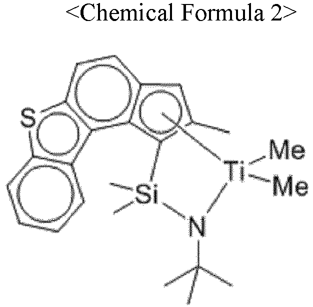

The co-catalyst compound may include one or more of a compound represented by the following Chemical Formula A, a compound represented by the following Chemical Formula B, and a compound represented by the following Chemical Formula C:

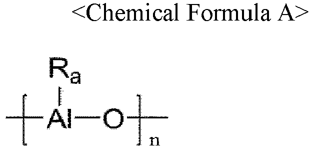

(In Chemical Formula A, n is an integer of 2 or more, and Rₐ is a halogen atom, a C₁₋₂₀ hydrocarbon group, or a C₁₋₂₀ hydrocarbon group substituted with a halogen.)

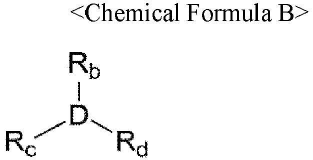

(In Chemical Formula B, D is aluminum (Al) or boron (B), and R_{b}, R_{c}, and R_{d} are each independently a halogen atom, a C₁₋₂₀ hydrocarbon group, a C₁₋₂₀ hydrocarbon group substituted with a halogen, or a C₁₋₂₀ alkoxy group.)

<Chemical Formula C> [L-H]⁺[Z(A)₄]⁻ or [L]⁺[Z(A)₄]⁻

(In Chemical Formula C, L is a neutral or cationic Lewis base, [L-H]⁺ and [L]⁺ are a Brønsted acid, Z is a Group 13 element, and A is each independently a substituted or unsubstituted C₆₋₂₀ aryl group or a substituted or unsubstituted C₁₋₂₀ alkyl group.)

A polyolefin may be prepared through the polymerization of olefin-based monomers in the presence of the olefin polymerization catalyst.

The olefin-based monomer may include one or more selected from the group consisting of a C₂₋₂₀ α-olefin, a C₁₋₂₀ diolefin, a C₃₋₂₀ cycloolefin, and a C₃₋₂₀ cyclodiolefin.

The polyolefin may have been prepared through the copolymerization of ethylene and 1-octene.

The polyolefin may have a molecular weight (Mw) of 210,000 or more.

The polyolefin may have a density of 0.900 g/cm³ or less.

Other details are included in the detailed description and the accompanying drawings.

### [Advantageous Effects]

At least the following effects are provided by the invention as defined in the claims.

The transition metal compound of the present invention as defined in the claims can be used for preparing an olefin polymerization catalyst having high activity and being highly capable of achieving copolymerization even at a high temperature, and a polyolefin prepared using the catalyst for polymerization thereof can exhibit excellent physical properties such as low density, high molecular weight, and the like.

In addition, an olefin polymerization catalyst containing the transition metal compound of the present invention as defined in the claims is synthesized with high yield and can be easily prepared even by an economical method, and thus is highly practical in a commercial sense.

The effects are not limited by the foregoing, and other various effects are included in the present specification.

### [Description of Drawings]

FIG. 1 is an ¹H-NMR spectrum of (2-methyl-1H-benzo[b]indeno[4,5-d]thiophen-1-yl)chlorodimethylsilane.
FIG. 2 is an ¹H-NMR spectrum of (2-methyl-1H-benzo[b]indeno[4,5-d]thiophen-1-yl)chlorodimethylsilane, which is a compound represented by Chemical Formula 3.
FIG. 3 is an ¹H-NMR spectrum of dimethylsilyl(*t*-butylamido)(2-methyl-1H-benzo[b]indeno[4,5-d]thiophen-1-yl)dimethyl titanium, which is a compound represented by Chemical Formula 2.

### [Modes of the Invention]

Advantages and features of the present invention as defined in the claims and methods of accomplishing the same may be understood more readily by reference to the following detailed description and the accompanying drawings.

As used herein, the term "C_{A-B}" means that "there are between A and B carbon atoms, inclusive," and the term "A to B" means "between A and B, inclusive." In addition, in the term "substituted or unsubstituted," "substituted" means that "at least one hydrogen atom in the hydrocarbon compound or hydrocarbon derivative has been substituted with a halogen, a C₁₋₂₀ alkyl, a C₂₋₂₀ alkenyl, a C₂₋₂₀ alkynyl, a C₆₋₂₀ aryl, a C₁₋₂₀ alkyl C₆₋₂₀ aryl, a C₆₋₂₀ aryl C₁₋₂₀ alkyl, a C₁₋₂₀ alkylamido, a C₆₋₂₀ arylamido, or a C₁₋₂₀ alkylidene" and "unsubstituted" means that "not even one hydrogen atom in the hydrocarbon compound or hydrocarbon derivative has been substituted with a halogen, a C₁₋₂₀ alkyl, a C₂₋₂₀ alkenyl, a C₂₋₂₀ alkynyl, a C₆₋₂₀ aryl, a C₁₋₂₀ alkyl C₆₋₂₀ aryl, a C₆₋₂₀ aryl C₁₋₂₀ alkyl, a C₁₋₂₀ alkylamido, a C₆₋₂₀ arylamido, or a C₁₋₂₀ alkylidene."

While the invention as defined in the claims relates to a trasnsition metal compound as per Formula 2, described herein are also atransition metal compound for an olefin polymerization catalyst represented by the following Chemical Formula 1.

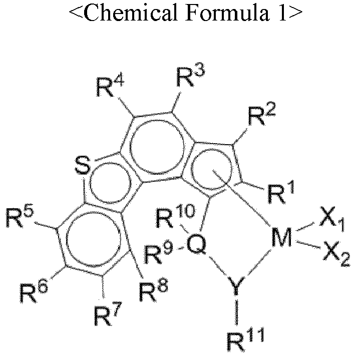

In Chemical Formula 1, M may be titanium (Ti), zirconium (Zr), or hafnium (Hf), Q may be silicon (Si), carbon (C), or germanium (Ge), Y may be a Group 15 element such as nitrogen (N), phosphorus (P), or the like, or when R¹¹ is unsubstituted, a Group 16 element such as oxygen (O), sulfur (S), or the like, X₁ and X₂ are each independently a halogen, a C₁₋₂₀ alkyl, a C₂₋₂₀ alkenyl, a C₂₋₂₀ alkynyl, a C₆₋₂₀ aryl, a C₁₋₂₀ alkyl C₆₋₂₀ aryl, a C₆₋₂₀ aryl C₁₋₂₀ alkyl, a C₁₋₂₀ alkylamido, a C₆₋₂₀ arylamido, or a C₁₋₂₀ alkylidene, and R¹ to R¹¹ may be each independently a hydrogen atom, a substituted or unsubstituted C₁₋₂₀ alkyl, a substituted or unsubstituted C₂₋₂₀ alkenyl, a substituted or unsubstituted C₆₋₂₀ aryl, a substituted or unsubstituted C₁₋₂₀ alkyl C₆₋₂₀ aryl, a substituted or unsubstituted C₆₋₂₀ aryl C₁₋₂₀ alkyl, a substituted or unsubstituted C₁₋₂₀ heteroalkyl, a substituted or unsubstituted C₃₋₂₀ heteroaryl, or a substituted or unsubstituted C₁₋₂₀ silyl.

In addition, a neighboring two among R⁵ to R⁸ may be connected to each other, forming a substituted or unsubstituted C₅₋₂₀ ring.

Specifically, the transition metal compound may be at least one of the compounds represented by the following Chemical Formulas 1-1 to 1-12.

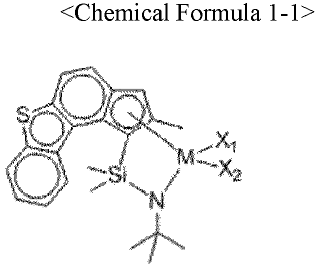

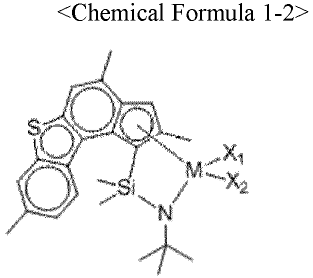

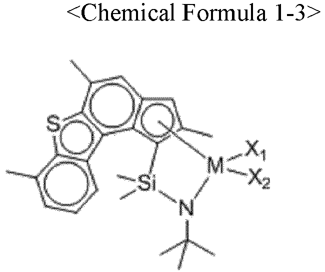

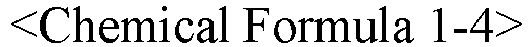

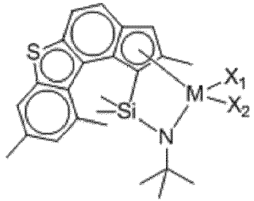

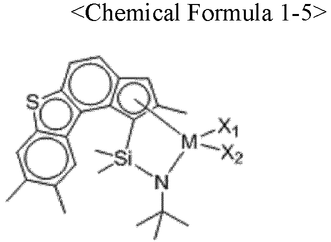

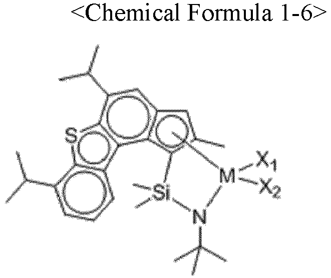

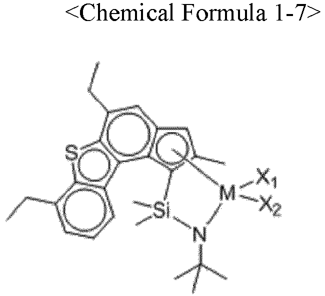

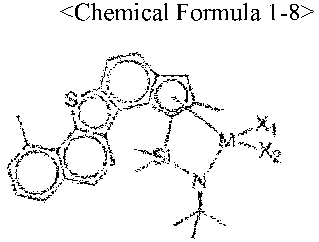

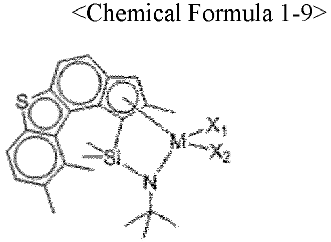

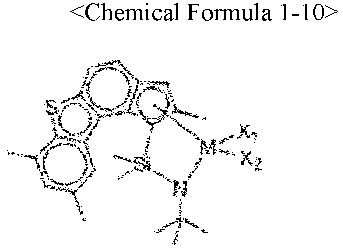

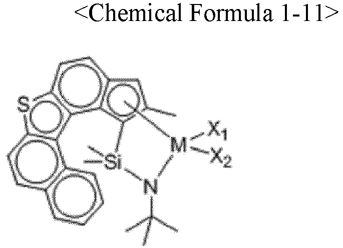

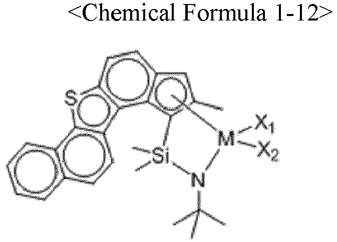

In each independent Chemical Formula 1-1 to Chemical Formula 1-2, M may be Ti, Zr, or Hf, and X₁ and X₂ may be each independently a halogen, a C₁₋₂₀ alkyl, a C₂₋₂₀ alkenyl, a C₂₋₂₀ alkynyl, a C₆₋₂₀ aryl, a C₁₋₂₀ alkyl C₆₋₂₀ aryl, a C₆₋₂₀ aryl C₁₋₂₀ alkyl, a C₁₋₂₀ alkylamido, a C₆₋₂₀ arylamido, or a C₁₋₂₀ alkylidene.

Meanwhile in Chemical Formula 1, R² to R⁸ may be each a hydrogen atom. The transition metal compound may be represented by the following Chemical Formula 2, which in fact corresponds to the invention as defined in the appended claims:

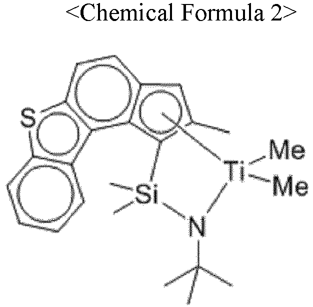

The olefin polymerization catalyst may contain: one or more of the above-exemplified transition metal compounds; and a co-catalyst compound.

The co-catalyst compound may include one or more of the compound represented by the following Chemical Formula A, the compound represented by the following Chemical Formula B, and the compound represented by the following Chemical Formula C.

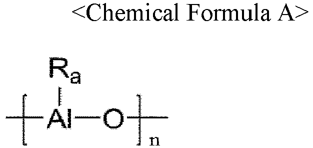

In Chemical Formula A, n may be an integer of 2 or more, Rₐ may be a halogen atom, a C₁₋₂₀ hydrocarbon group, or a C₁₋₂₀ hydrocarbon group substituted with a halogen. Specifically, Rₐ may be methyl, ethyl, n-butyl, or isobutyl, but the present invention is not limited thereto.

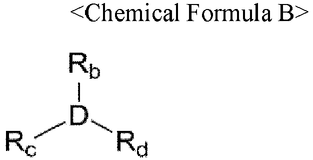

In Chemical Formula B, D may be aluminum (Al) or boron (B), and R_{b}, R_{c}, and R_{d} may be each independently a halogen atom, a C₁₋₂₀ hydrocarbon group, a C₁₋₂₀ hydrocarbon group substituted with a halogen, or a C₁₋₂₀ alkoxy group. Specifically, when D is Al, R_{b}, R_{c}, and R_{d} may be each independently methyl or isobutyl, and when D is B, R_{b}, R_{c}, and R_{d} may be each pentafluorophenyl.

<Chemical Formula C> [L-H]⁺[Z(A)₄]⁻ or [L]⁺[Z(A)₄]⁻

In Chemical Formula C, L may be a neutral or cationic Lewis base, [L-H]⁺ or [L]⁺ may be a Brønsted acid, Z may be a Group 13 element, and A may be each independently a substituted or unsubstituted C₆₋₂₀ aryl group or a substituted or unsubstituted C₁₋₂₀ alkyl group. Specifically, [L-H]⁺ may be a dimethylanilinium cation, [Z(A)₄]⁻ may be [B(C₆F₅)₄]⁻, and [L]⁺ may be [(C₆H₅)₃C]⁺.

The olefin polymerization catalyst may further contain a carrier.

There is no particular limitation on the carrier as long as it can support a transition metal compound for an olefin polymerization catalyst and a co-catalyst compound. The carrier may be carbon, silica, alumina, zeolite, magnesium chloride, or the like.

As a method of supporting a transition metal compound for an olefin polymerization catalyst and a co-catalyst compound on the carrier, a physical adsorption method or a chemical adsorption method may be used.

Tthe physical adsorption method may be a method in which a carrier is brought into contact with a solution containing a transition metal compound for an olefin polymerization catalyst dissolved therein and then dried, a method in which a carrier is brought into contact with a solution containing both a transition metal compound for an olefin polymerization catalyst and a co-catalyst compound dissolved therein and then dried, or a method in which a carrier supporting a transition metal compound for an olefin polymerization catalyst and a carrier supporting a co-catalyst compound are prepared separately, respectively by bringing a carrier into contact with a solution containing the transition metal compound for an olefin polymerization catalyst dissolved therein and then drying the same and by bringing a carrier into contact with a solution containing the co-catalyst compound dissolved therein and then drying the same, and are subsequently mixed together.

The chemical adsorption method may be a method in which a co-catalyst compound is first supported on the surface of a carrier and then a transition metal compound for an olefin polymerization catalyst is supported on the co-catalyst compound, or a method in which a functional group on the surface of a carrier (e.g., in the case of silica, a hydroxyl group (-OH) on the silica surface) is linked to a catalyst compound through a covalent bond.

The total amount of supported main catalyst compound, including the transition metal compound, may be 0.001 mmol to 1 mmol based on 1 g of the carrier, and the amount of supported co-catalyst compound may be 2 mmol to 15 mmol based on 1 g of the carrier.

However, the use of such a carrier is not essential, and the decision as to whether or not a carrier should be used may be appropriately made depending on necessity.

Meanwhile, a polyolefin may be prepared by polymerizing olefin-based monomers in the presence of the above-described olefin polymerization catalyst of the present invention.

The polyolefin may be, for example, a homopolymer or copolymer obtained by a polymerization reaction such as free-radical polymerization, cationic polymerization, coordination polymerization, condensation polymerization, addition polymerization, or the like, but the present invention is not limited thereto.

The polyolefin may be produced by gas-phase polymerization, solution polymerization, slurry polymerization, or the like. Examples of the solvent that may be used for preparing the polyolefin by solution polymerization or slurry polymerization may include: C₅₋₁₂ aliphatic hydrocarbon solvents such as pentane, hexane, heptane, nonane, decane, and isomers thereof; aromatic hydrocarbon solvents such as toluene and benzene; hydrocarbon solvents substituted with chlorine atoms, such as dichloromethane and chlorobenzene; mixtures thereof; and the like.

The olefin-based monomer may be one or more selected from the group consisting of a C₂₋₂₀ α-olefin, a C₁₋₂₀ diolefin, a C₃₋₂₀ cycloolefin, and a C₃₋₂₀ cyclodiolefin.

The olefin-based monomer may be ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, or the like, and the polyolefin may be a homopolymer containing only one type of the above-exemplified olefin-based monomer or a copolymer containing two or more types of the above-exemplified olefin-based monomer.

Preferably, the polyolefin is a copolymer of ethylene and 1-octene.

The polyolefin obtained by polymerization in the presence of the olefin polymerization catalyst of the present invention as defined in the claims may have a molecular weight (Mw) of 210,000 or more, and may specifically have a molecular weight (Mw) of 219,000 or more when the density is 0.900 g/cm³ or less. In addition, the polyolefin may have a density of 0.900 g/cm³ or less and a catalyst activity of 80 kg/mmol·h or more.

In regard to the obtained polyolefin, the molecular weight (Mw) of 210,000 or more is favorable in terms of the tensile strength of the polyolefin, the density of 0.900 g/cm³ or less is favorable in terms of the elastic modulus and transparency of the polyolefin, and the catalyst activity of 80 kg/mmol·h or more is favorable in terms of the reduction of polyolefin production costs because it leads to excellent polymerization reactivity with respect to the amount of catalyst used.

Hereinafter, details of preparation examples regarding, among the transition metal compounds for an olefin polymerization catalyst of the present invention as defined in the claims, the above-described compound represented by Chemical Formula 2, and details of an experimental example for evaluating the physical properties of the polyolefins obtained by polymerization in the presence of an olefin polymerization catalyst containing the above-described transition metal compound will be described.

### <Preparation Example 1> Preparation of compound of Chemical Formula 2

### Preparation Example 1-1: Preparation of 1,2-dihydro-2-methyl-3H-benzo[b]indeno[4,5-d]thiophen-3-one

Methacryloyl chloride (2.8 g, 27 mmol) and a solution prepared by diluting dibenzothiophene (5.0 g, 27 mmol) in dichloromethane (50 mL) were added, at-78 °C, to a solution prepared by dispersing AlCl₃ (7.2 g, 54 mmol) in dichloromethane (150 mL). After completion of the addition, the mixture was stirred at room temperature for 12 hours, and then water was added at 0 °C to terminate the reaction. Afterward, the organic layer was extracted, the solvent was removed in vacuo, the resultant was subjected to column chromatography, and thereby 4.2 g (61%) of 1,2-dihydro-2-methyl-3H-benzo[b]indeno[4,5-d]thiophen-3-one having the following ¹H-NMR spectrum was obtained.

¹H-NMR (CDCl₃, 300 MHz): 8.25 (m, 1H), 7.92 (m, 1H), 7.83 (m, 2H), 7.53 (m, 2H), 3.93 (m, 1H), 3.21 (m, 1H), 2.88 (m, 1H), 1.43 (d, 3H).

### Preparation Example 1-2: Preparation of 2,3-dihydro-2-methyl-1H-benzo[b]indeno[4,5-d]thiophen-3-ol

Sodium borohydride (NaBH₄) (624 mg, 17 mmol) was added, at 0 °C, to a solution prepared by dissolving the 1,2-dihydro-2-methyl-3H-benzo[b]indeno[4,5-d]thiophen-3-one (4.2 g, 17 mmol) obtained in Preparation Example 1-1 in a 1:9 (v/v) solvent mixture (50 mL) of THF and methanol. The temperature was gradually raised to room temperature, and thereafter the mixture was stirred for one hour. After completion of the reaction, all the solvent was removed in vacuo, and the organic layer was extracted with dichloromethane. Afterward, moisture was removed from the organic layer using magnesium sulfate, the solvent was subsequently removed in vacuo, and thereby 3.4 g (81%, diastereomeric alcohols) of 2,3-dihydro-2-methyl-1H-benzo[b]indeno[4,5-d]thiophen-3-ol having the following ¹H-NMR spectrum was obtained.

¹H-NMR (CDCl₃, 300 MHz): 8.19 (m, 1H), 7.87 (m, 1H), 7.76 (d, 1H), 7.44-7.56(m, 3H), 4.91 and 5.17 (2s, 1H), 3.60 and 3.79 (2m, 1H), 2.96 and 3.17 (2m, 1H), 2.49 and 2.75 (2m, 1H), 1.86 and 1.66 (2s, 1H), 1.35 and 1.30 (2d, 3H).

### Preparation Example 1-3: Preparation of 2-methyl-1H-benzo[b]indeno[4,5-d]thiophene

The 2,3-dihydro-2-methyl-1H-benzo[b]indeno[4,5-d]thiophen-3-ol (3.4 g, 13 mmol) obtained in Preparation Example 1-2 and p-toluenesulfonic acid (13 mg, 0.5 mol%) were added to toluene (30 mL), and the mixture was stirred for one hour while refluxing at 110 °C. After completion of the reaction, the resultant was subjected to column chromatography, and thereby 2.2 g (69%) of 2-methyl-1H-benzo[b]indeno[4,5-d]thiophene having the following ¹H-NMR spectrum was obtained.

¹H-NMR (CDCl₃, 300 MHz): 8.18 (m, 1H), 7.88 (m, 1H), 7.73 (d, 1H), 7.40-7.52 (m, 3H), 6.64 (s, 1H), 3.76 (s, 2H), 2.28 (s, 3H).

### Preparation Example 1-4: (2-methyl-1H-benzo[blindeno[4,5-d]thiophen-1-yl)chlorodimethylsilane preparation of

*n*-Butyllithium (4.3 g, 10 mmol, 1.6 M in hexane) was added slowly, at -78 °C, to a solution prepared by diluting the 2-methyl-1H-benzo[b]indeno[4,5-d]thiophene (2.2 g, 9.3 mmol) obtained in Preparation Example 1-3 in diethyl ether (50 mL). The temperature was gradually raised to room temperature, and thereafter the mixture was stirred for 12 hours. After stirring, the resulting solid was isolated through filtration and then dried in vacuo, and thereby 2.2 g (99%) of a lithium salt compound was obtained.

A dispersion of the above-described lithium salt compound (2.2 g, 9.1 mmol) in diethyl ether (30 mL) was added slowly, at -78 °C, to a solution prepared by diluting dichlorodimethylsilane (Me₂SiCl₂) (3.5 g, 27 mmol) in diethyl ether (70 mL). The temperature was gradually raised to room temperature, and thereafter the mixture was stirred for 12 hours. After completion of the reaction, the solvent was removed in vacuo, and the resultant was subjected to extraction with hexane and subsequent filtration. After removal of the solvent in vacuo, 2.8 g (95%) of (2-methyl-1H-benzo[b]indeno[4,5-d]thiophen-1-yl)chlorodimethylsilane was obtained.

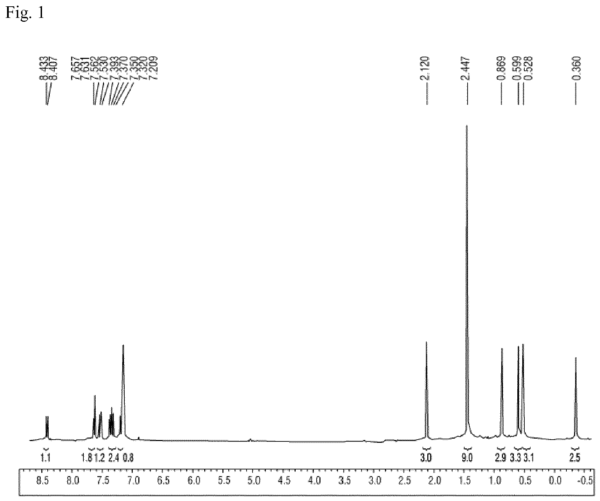

FIG. 1 is an ¹H-NMR spectrum of the above-described (2-methyl-1H-benzo[b]indeno[4,5-d]thiophen-1-yl)chlorodimethylsilane, which is as follows:
¹H-NMR (CDCl₃, 300 MHz): 8.40 (d, 1H), 7.88 (d, 1H), 7.60 (m, 2H), 7.42-7.52 (m, 3H), 3.75 (s, 1H), 2.44 (s, 3H), 0.41 (s, 3H), 0.16 (s, 3H).

### Preparation Example 1-5: Preparation of N-tert-butyl-1,1-dimethyl-1-(2-methyl-1H-benzo[b]indeno[4,5-d]thiophen-1-yl)silanamine

A solution prepared by diluting the (2-methyl-1H-benzo[b]indeno[4,5-d]thiophen-1-yl)chlorodimethylsilane (2.8 g, 8.5 mmol) obtained in Preparation Example 1-4 in THF (30 mL) was added slowly, at -78 °C, to a solution prepared by diluting *t*-butylamine (*t*-BuNH₂) (2.5 g, 34 mmol) in THF (30 mL). The temperature was gradually raised to room temperature, and thereafter the mixture was stirred for 12 hours. After completion of the reaction, all the solvent was removed in vacuo, and the resultant was subjected to extraction with hexane and subsequent filtration. After removal of the hexane in vacuo, 3.1 g (99%) of N-*tert*-butyl-1,1-dimethyl-1-(2-methyl-1H-benzo[b]indeno[4,5-d]thiophen-1-yl)silanamine, which is the compound represented by the following Chemical Formula 3, was obtained.

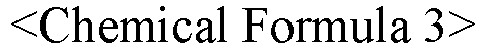

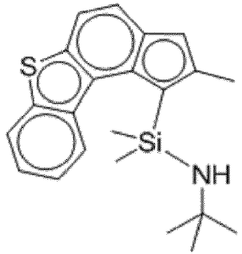

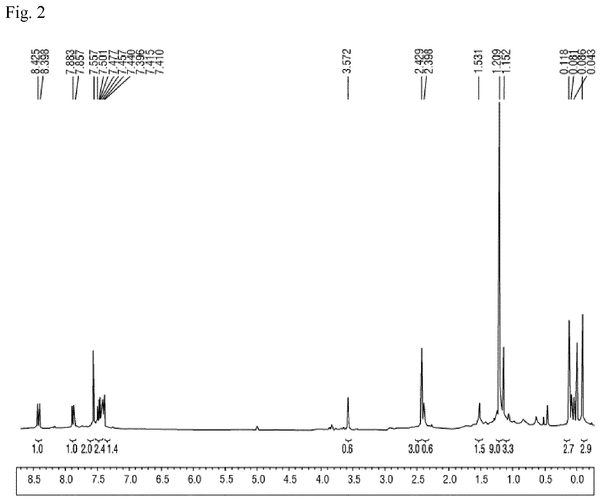

FIG. 2 is an ¹H-NMR spectrum of (2-methyl-1H-benzo[b]indeno[4,5-d]thiophen-1-yl)chlorodimethylsilane, which is the compound of Chemical Formula 3, wherein the spectrum is as follows:
¹H-NMR (CDCl₃, 300 MHz): 8.40 (d, 1H), 7.86 (d, 1H), 7.55(m, 2H), 7.39-7.48 (m, 3H), 3.57 (s, 1H), 2.42 (s, 3H), 1.21 (s, 9H), 0.12 (s, 3H), -0.09 (s, 3H).

### Preparation Example 1-6: Preparation of dimethylsilyl(t-butylamido)(2-methyl-1H-benzo[b]indeno[4,5-d]thiophen-1-yl)dimethyl titanium

Methyllithium (15.9 g, 35 mmol, a 1.6 M solution in diethyl ether) was added, at -30 °C, to a solution prepared by dissolving the N-*tert*-butyl-1,1-dimethyl-1-(2-methyl-1H-benzo[b]indeno[4,5-d]thiophen-1-yl)silanamine (3.1 g, 8.5 mmol) obtained in Preparation Example 1-5 in diethyl ether (30 ml). The temperature was gradually raised to room temperature, and thereafter the mixture was stirred for two hours. Afterward, TiCl₄ (1.62 g, 8.5 mmol) diluted in pentane (10 ml) was added slowly at -30 °C, and the mixture was stirred for two hours. After completion of the reaction, all the solvent was removed in vacuo, and the resultant was subjected to extraction with hexane and subsequent filtration. After removal of the hexane in vacuo, 786 mg (21%) of dimethylsilyl(t-butylamido)(2-methyl-1H-benzo[b]indeno[4,5-d]thiophen-1-yl)dimethyl titanium, which is the compound of Chemical Formula 2, was obtained.

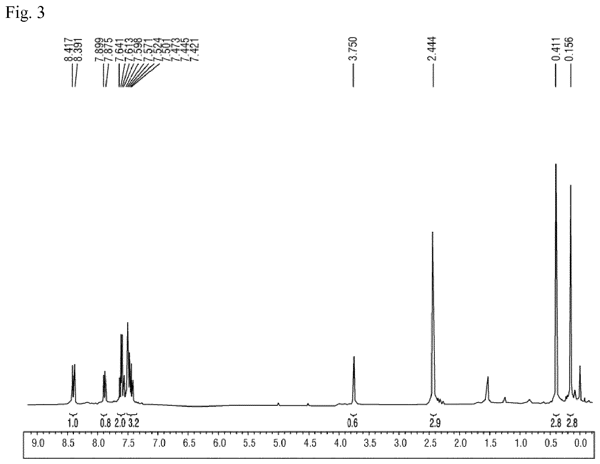

FIG. 3 is an ¹H-NMR spectrum of dimethylsilyl(*t*-butylamido)(2-methyl-1H-benzo[b]indeno[4,5-d]thiophen-1-yl)dimethyl titanium, which is the compound of Chemical Formula 2, wherein the spectrum is as follows:
¹H-NMR (Benzene-d₆, 300 MHz): 8.42 (d, 1H), 7.64 (m, 2H), 7.54 (d, 1H), 7.36 (m, 2H), 7.21 (s, 1H), 2.12 (s, 3H), 1.45 (s, 9H), 0.87 (s, 3H), 0.60 (s, 3H), 0.53 (s, 3H), -0.36 (s, 3H).

### <Preparation Example 2> Synthesis (1) of ethylene/1-octene copolymer using olefin polymerization catalyst containing compound of Chemical Formula 2

Ethylene and 1-octene were copolymerized as follows, using an olefin polymerization catalyst containing the above-described compound of Chemical Formula 2.

First, a hexane solvent (1 L) and 1-octene (45 g) were added to a 2-L autoclave reactor, and then the reactor was preheated to a temperature of 70 °C. Next, the transition metal compound (4 × 10⁻⁶ M) of Chemical Formula 2 obtained in Preparation Example 1 and having been treated with a triisobutylaluminum compound was added to a catalyst storage tank and was subsequently introduced into the reactor by applying high-pressure argon thereto. A 2.4 × 10⁻⁵ M dimethylanilinium tetrakis(pentafluorophenyl)borate co-catalyst was introduced into the reactor by applying high-pressure argon thereto.

Ethylene gas was injected while controlling the ethylene pressure so that the overall pressure in the reactor was maintained at 30 bar, and afterward the polymerization reaction was carried out for five minutes. During the polymerization reaction, the polymerization temperature was maintained as constant as possible at 90 °C by removing the heat of reaction using a cooling coil inside the reactor.

After the polymerization reaction, the remaining gas was discharged, and the polymer solution was discharged through the lower part of the reactor and then cooled by adding an excessive amount of ethanol thereto to induce precipitation. The obtained polymer was washed two to three times with each of ethanol and acetone and then dried in a 80 °C vacuum oven for at least 12 hours, and thereby an ethylene/1-octene copolymer was obtained.

### <Preparation Example 3> Synthesis (2) of ethylene/1-octene copolymer using olefin polymerization catalyst containing compound of Chemical Formula 2

An ethylene/1-octene copolymer was obtained in the same manner as in Preparation Example 2, except that 67 g of 1-octene was used.

### <Comparative Example> Synthesis of ethylene/1-octene copolymer using olefin polymerization catalyst containing dimethylsilylene(t-butylamido)(indenyl)titanium dimethyl

An ethylene/1-octene copolymer was obtained in the same manner as in Preparation Example 2, except that dimethylsilylene(t-butylamido)(indenyl)titanium dimethyl represented by the following Chemical Formula 4 was used as the transition metal compound.

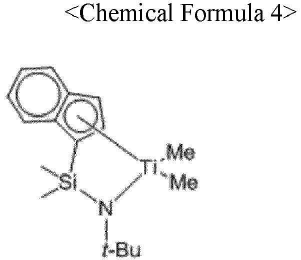

### <Experimental Example> Physical property measurement of ethylene/1-octene copolymers

The physical properties of the ethylene/1-octene copolymers prepared according to Preparation Examples 2 and 3 and the Comparative Example were measured, and the results are shown in Table 1 below.

**[Table 1]**

| Copolymer | Concentration of added 1-octene (M) | Polymer weight (g) | Density (g/cm³) | Molecular weight (Mw) | Catalyst activity (kg/mmol·h) |
|---|---|---|---|---|---|
| Preparation Example 2 | 0.4 | 33.5 | 0.894 | 276,659 | 100.5 |
| Preparation Example 3 | 0.6 | 34.5 | 0.879 | 219,548 | 103.4 |
| Comparative Example | 0.4 | 25.2 | 0.909 | 203,287 | 76 |

As shown in Table 1, it can be seen that, when used for preparing an olefin polymer, an olefin polymerization catalyst containing a compound of the present invention as defined in the claims is more capable of producing an olefin polymer having a high molecular weight and a low density with high activity than the olefin polymerization catalyst of the Comparative Example.

## Claims

1. A transition metal compound for an olefin polymerization catalyst, the transition metal compound represented by the following Chemical Formula 2:

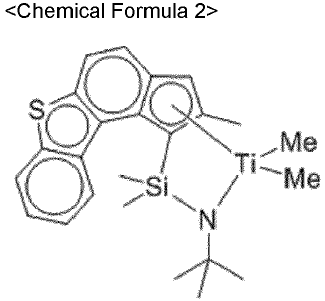

2. An olefin polymerization catalyst comprising:
a transition metal compound represented by the following Chemical Formula 2; and
a co-catalyst compound.

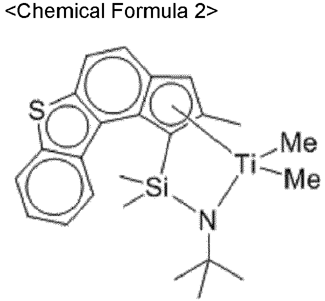

3. The olefin polymerization catalyst of claim 2, wherein the co-catalyst compound includes one or more of a compound represented by the following Chemical Formula A, a compound represented by the following Chemical Formula B, and a compound represented by the following Chemical Formula C: 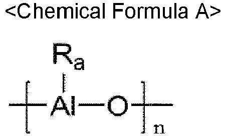
wherein in Chemical Formula A,
n is an integer of 2 or more, and
Rₐ is a halogen atom, a C₁₋₂₀ hydrocarbon group, or a C₁₋₂₀ hydrocarbon group substituted with a halogen; 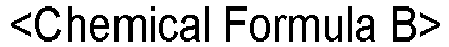 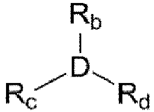
Wherein in Chemical Formula B,
D is aluminum (Al) or boron (B), and
R_{b}, R_{c}, and R_{d} are each independently a halogen atom, a C₁₋₂₀ hydrocarbon group, a C₁₋₂₀ hydrocarbon group substituted with a halogen, or a C₁₋₂₀ alkoxy group;
<Chemical Formula C> [L-H]⁺[Z(A)₄]⁻ or [L]⁺[Z(A)₄]⁻
Wherein in Chemical Formula C,
L is a neutral or cationic Lewis base,
[L-H]⁺ and [L]⁺ are a Brønsted acid,
Z is a Group 13 element, and
A is each independently a substituted or unsubstituted C₆₋₂₀ aryl group or a substituted or unsubstituted C₁₋₂₀ alkyl group.

## Patentansprüche

1. Übergangsmetallverbindung für einen Olefinpolymerisationskatalysator, wobei die Übergangsmetallverbindung durch die folgende chemische Formel 2 wiedergegeben wird:

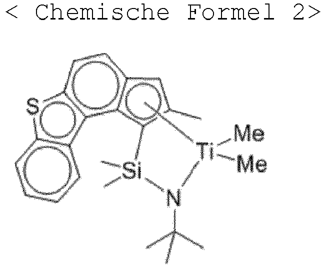

2. Olefinpolymerisationskatalysator, umfassend:
eine Übergangsmetallverbindung, die durch die folgende chemische Formel 2 wiedergegeben wird; und
eine Cokatalysatorverbindung.

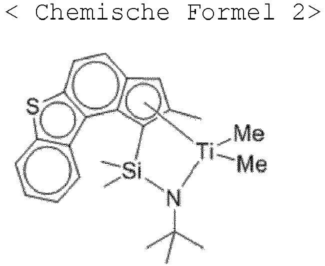

3. Olefinpolymerisationskatalysator nach Anspruch 2, wobei die Cokatalysatorverbindung eine oder mehrere von einer Verbindung, die durch die folgende chemische Formel A wiedergegeben wird, einer Verbindung, die durch die folgende chemische Formel B wiedergegeben wird, und einer Verbindung, die durch die folgende chemische Formel C wiedergegeben wird, enthält: 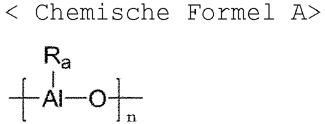
wobei in der chemischen Formel A
n für eine ganze Zahl mit einem Wert von 2 oder mehr steht und
Rₐ für ein Halogenatom, eine C₁₋₂₀-Kohlenwasserstoffgruppe oder eine durch ein Halogen substituierte C₁₋₂₀-Kohlenwasserstoffgruppe steht; 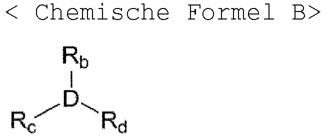
wobei in der chemischen Formel B
D für Aluminium (Al) oder Bor (B) steht und
R_{b}, R_{c} und R_{d} jeweils unabhängig für ein Halogenatom, eine C₁₋₂₀-Kohlenwasserstoffgruppe, eine durch ein Halogen substituierte C₁₋₂₀-Kohlenwasserstoffgruppe oder eine C₁₋₂₀-Alkoxygruppe stehen;
< Chemische Formel C> [L-H]⁺[Z (A)₄]⁻ oder [L]⁺[Z(A)₄]⁻
wobei in der chemischen Formel C
L für eine neutrale oder kationische Lewis-Base steht,
[L-H]⁺ und [L]⁺ für eine Brönsted-Säure stehen,
Z für ein Element der Gruppe 13 steht und
A jeweils unabhängig für eine substituierte oder unsubstituierte C₆₋₂₀-Arylgruppe oder eine substituierte oder unsubstituierte C₁₋₂₀-Alkylgruppe steht.

## Revendications

1. Composé de métal de transition pour un catalyseur de polymérisation d'oléfines, le composé de métal de transition étant représenté par la formule chimique 2 suivante:

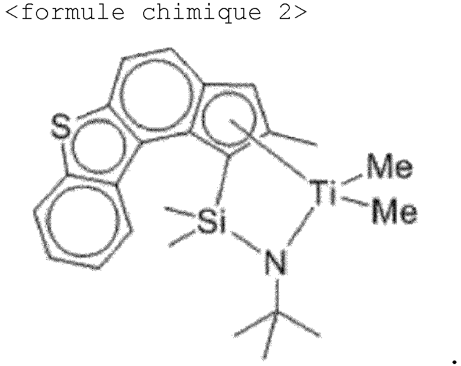

2. Catalyseur de polymérisation d'oléfines comprenant :
un composé de métal de transition représenté par la formule chimique 2 suivante ; et
un composé de co-catalyseur,

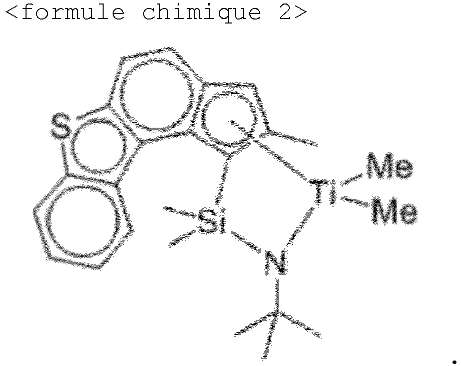

3. Catalyseur de polymérisation d'oléfines selon la revendication 2, le composé de co-catalyseur comprenant l'un ou plusieurs parmi un composé représenté par la formule chimique A suivante, un composé représenté par la formule chimique B suivante, et un composé représenté par la formule chimique C suivante: 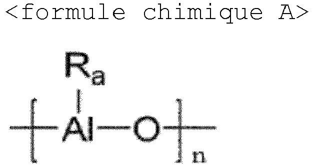
dans la formule chimique A,
n étant un entier de 2 ou plus, et
Rₐ étant un atome d'halogène, un groupe hydrocarboné en C₁₋₂₀, ou un groupe hydrocarboné en C₁₋₂₀ substitué par un halogène ; 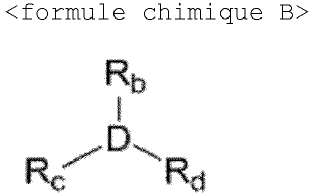
dans la formule chimique B,
D étant aluminium (Al) ou bore (B), et
R_{b}, R_{c} et R_{d} étant chacun indépendamment un atome d'halogène, un groupe hydrocarboné en C₁₋₂₀, un groupe hydrocarboné en C₁₋₂₀ substitué par un halogène, ou un groupe alcoxy en C₁₋₂₀ ;
<formule chimique C> [L-H]⁺[Z(A)₄]⁻ ou [L]⁺[Z(A)₄]⁻
dans la formule chimique C,
L étant une base de Lewis neutre ou cationique,
[L-H]⁺ et [L]⁺ étant un acide de Bronsted,
Z étant un élément du groupe 13, et
A étant chacun indépendamment un groupe aryle en C₆₋₂₀ substitué ou non substitué ou un groupe alkyle en C₁₋₂₀ substitué ou non substitué.
